# EUROPEAN PATENT APPLICATION

(11) **EP 4 541 649 A1**
(43) Date of publication of application: **23.04.2025**
(21) Application number: 23858919.6
(22) Date of filing: 30.06.2023
(51) Int. Cl.: B60N 2/02

(54) **SHOULDER ADJUSTMENT MECHANISM FOR SEAT OF VEHICLE, SEAT, AND VEHICLE**

(30) Priority: 31.08.2022 CN 202222322114 U
(71) Applicant: Nio Technology (Anhui) Co., Ltd, Hefei City, Anhui 230601 (CN)
(72) Inventor: JIA, Jifeng, Shanghai 201804 (CN); SHI, Jiangnan, Shanghai 201804 (CN); YANG, Yonggang, Shanghai 201804 (CN); WANG, Qiong, Shanghai 201804 (CN)
(74) Representative: Vossius & Partner Patentanwälte Rechtsanwälte mbB
(86) International application number: PCT/CN2023/105217
(87) International publication number: WO 2024/045881

(57) **Abstract**

The invention relates to the technical field of vehicle manufacturing, and specifically, provides a shoulder adjustment mechanism for a seat of a vehicle, the seat including a shoulder adjustment mechanism and a seat back. The shoulder adjustment mechanism includes a first bracket, a second bracket, and a linear driving assembly, wherein the first bracket is configured to be pivotally connected to the seat back; the second bracket is configured to be fixed on the seat back, and first guide rails are disposed on the second bracket; the linear driving assembly is disposed on the first bracket, an output end of the linear driving assembly is connected to the first guide rails, and a driving direction of the linear driving assembly is set to have a first angle with a horizontal direction in which a seat cushion of the seat is located, the first angle being greater than 0° and less than 180°; and the shoulder adjustment mechanism is configured to be driven by the linear driving assembly to enable the first bracket to rotate about the seat back. In this way, the linear driving assembly drives the structure of the first bracket to slide along the first guide rails, implementing rotation of the first bracket about the seat back.

## Description

The present application claims the priority to Chinese Patent Application No. CN 202222322114.0, filed on August 31, 2022, and entitled "SHOULDER ADJUSTMENT MECHANISM FOR SEAT OF VEHICLE, SEAT, AND VEHICLE", which is incorporated herein by reference in its entirety.

### TECHNICAL FIELD

The invention relates to the technical field of vehicle manufacturing, and specifically, provides a shoulder adjustment mechanism for a seat of a vehicle.

### TECHNICAL BACKGROUND

Vehicle seats are important safety components in a vehicle and directly affect the riding comfort of passengers. As increasingly higher requirements are made on the comfort of vehicle seats, drivers and passengers have more and more demands for various adjustment functions of the vehicle seats. In the field of vehicle seat shoulder adjustment, seat shoulder adjustment mechanisms currently on the market have relatively simple structures. In addition, due to the arrangement of the mechanism, there are high requirements for space in the X direction of a vehicle body, resulting in poor adaptability of the shoulder adjustment mechanism to different seats.

Therefore, there is a need in the art to provide a new shoulder adjustment mechanism for a seat of a vehicle to solve the above problems.

### SUMMARY

The invention is intended to solve the above technical problems, that is, to solve a problem of inconvenient use caused by high requirements for space in an X direction of a vehicle body due to improper arrangement of the mechanism of an existing seat used for a vehicle.

According to a first aspect, the invention provides a shoulder adjustment mechanism for a seat of a vehicle, the seat including a shoulder adjustment mechanism and a seat back, and the shoulder adjustment mechanism including a first bracket, a second bracket, and a linear driving assembly, where
the first bracket is configured to be pivotally connected to the seat back;
the second bracket is configured to be fixed on the seat back, and first guide rails are disposed on the second bracket;
the linear driving assembly is disposed on the first bracket, an output end of the linear driving assembly is connected to the first guide rails, and a driving direction of the linear driving assembly is set to have a first angle with a horizontal direction in which a seat cushion of the seat is located, and the first angle being greater than 0° and less than 180°; and
the shoulder adjustment mechanism is configured to be driven by the linear driving assembly to enable the first bracket to rotate about the seat back.

In the above specific implementation of the shoulder adjustment mechanism for a seat of a vehicle, the first bracket includes a headrest mounting bracket and two rotating rods, one end of the rotating rod being pivotally connected to the seat back, and the other end of the rotating rod being fixedly connected to the headrest mounting bracket.

In the above specific implementation of the shoulder adjustment mechanism for a seat of a vehicle, the linear driving assembly includes a linear motor, second guide rails, and a slider;
the linear motor is fixed on the headrest mounting bracket;
the second guide rails are fixed on the headrest mounting bracket;
the slider is slidably disposed on the second guide rails, and an output end of the linear motor is drivingly connected to the slider; and
the slider is connected to the first guide rails.

In the above specific implementation of the shoulder adjustment mechanism for a seat of a vehicle, rollers or protrusions are disposed on two sides of the slider, correspondingly the first guide rails are guide rail grooves, and the rollers or protrusions are disposed in the guide rail grooves.

In the above specific implementation of the shoulder adjustment mechanism for a seat of a vehicle, the first angle is 90°.

In the above specific implementation of the shoulder adjustment mechanism for a seat of a vehicle, an angle between the first guide rail and the horizontal direction in which the seat cushion is located is greater than 0° and less than 180°.

In the above specific implementation of the shoulder adjustment mechanism for a seat of a vehicle, a rotating shaft mounting hole is formed in one end of the rotating rod, and the rotating rod is pivotally connected to the seat back through the rotating shaft mounting hole.

The invention further provides a shoulder adjustment mechanism for a seat of a vehicle, the seat including a shoulder adjustment mechanism and a seat back, and the shoulder adjustment mechanism including a first bracket, a second bracket, and a linear driving assembly, where the first bracket is configured to be pivotally connected to the seat back; the second bracket is integrally disposed on the seat back, and first guide rails are disposed on the second bracket; the linear driving assembly is disposed on the first bracket, an output end of the linear driving assembly is connected to the first guide rails, and a driving direction of the linear driving assembly is set to have a first angle with a horizontal direction in which a seat cushion of the seat is located, and the first angle being greater than 0° and less than 180°; and the shoulder adjustment mechanism is configured to be driven by the linear driving assembly to enable the first bracket to rotate about the seat back.

The invention further provides a seat, including a shoulder adjustment mechanism for a seat of a vehicle as described in any one of the above technical solutions.

The invention further provides a vehicle, including a seat as described in the above technical solution.

In a case that the above technical solutions are used, to solve the problems in the background art, the shoulder adjustment mechanism for a seat of a vehicle of the invention includes a first bracket, a second bracket, and a linear driving assembly. When shoulder adjustment needs to be performed on the seat, the output end of the linear driving assembly slides along the first guide rails. The second bracket can be fixedly fixed on the seat back because the first guide rails are disposed on the second bracket. Therefore, when the output end of the linear driving assembly slides along the first guide rails, the linear driving assembly also moves. In addition, the first bracket can be pivotally connected to the seat back because the linear driving assembly is disposed on the first bracket. Therefore, a driving force output by the linear driving assembly enables the first bracket to rotate about the seat back. Based on the foregoing implementations, the first angle between the driving direction of the linear driving assembly and the horizontal direction in which the seat cushion of the seat is located is set to be greater than 0° and less than 180°. In addition, the angle between the first guide rail and the horizontal direction in which the seat cushion is located is set to be greater than 0° and less than 90° or greater than 90° and less than 180°. In this way, the driving direction of the linear driving assembly has components in both X and Z directions (X is the horizontal direction in which the seat cushion of the seat is located, and Z is a vertical direction in which the seat cushion of the seat is located). The component in the X direction can drive the first bracket to rotate about the seat back, and the component in the Z direction reduces occupation of a space of a vehicle body in the X direction. Compared with an existing solution in which the linear driving assembly is disposed in the X direction and the linear driving assembly occupies a maximum space in the X direction, the technical solutions of the invention can implement a shoulder adjustment function of the seat and significantly reduce occupation of the space in the X direction of the vehicle body, thereby solving a problem of inconvenient use caused by high requirements for space in the X direction of the vehicle body due to improper arrangement of the mechanism of an existing seat used for a vehicle.

### BRIEF DESCRIPTION OF THE DRAWINGS

Preferred implementations of the invention are described below with reference to the accompanying drawings, in which:
FIG. 1 is a schematic diagram of a structure of a seat with a shoulder adjustment mechanism for a seat of a vehicle according to the invention;
FIG. 2 is a schematic diagram of an overall structure of a shoulder adjustment mechanism for a seat of a vehicle according to the invention;
FIG. 3 is a schematic diagram of a structure of a first bracket of a shoulder adjustment mechanism for a seat of a vehicle according to the invention;
FIG. 4 is a schematic diagram of a structure of a second bracket of a shoulder adjustment mechanism for a seat of a vehicle according to the invention;
FIG. 5 is a schematic diagram of a structure of a linear driving assembly of a shoulder adjustment mechanism for a seat of a vehicle according to the invention;
FIG. 6 is a schematic diagram of a structure of a second bracket of a shoulder adjustment mechanism for a seat of a vehicle according to the invention mounted to a seat back;
FIG. 7 is a diagram defining angle directions of a shoulder adjustment mechanism for a seat of a vehicle according to the invention; and
FIG. 8 is a schematic diagram of a seat after a shoulder adjustment mechanism for a seat of a vehicle according to the invention is adjusted.

### List of reference signs:

1 - seat; 11 - shoulder adjustment mechanism; 111 - first bracket; 1111 - headrest mounting bracket; 1112 - rotating rod; 11121 - rotating shaft mounting hole; 112 - second bracket; 1121 - first guide rail; 113 - linear driving assembly; 1131 - linear motor; 1132 - second guide rail; 1133 - slider; 11331 - roller or protrusion; and 12 - seat back.

### DETAILED DESCRIPTION OF EMBODIMENTS

Preferred implementations of the invention will be described below with reference to the accompanying drawings. Those skilled in the art should understand that these implementations are merely used to explain the technical principles of the invention, and are not intended to limit the scope of protection of the invention. Those skilled in the art can make adjustments to the implementations according to requirements, so as to adapt to specific application scenarios.

In addition, it should also be noted that, in the description of the invention, the terms "connect" should be interpreted in a broad sense unless explicitly defined and limited otherwise, which, for example, may be a fixed connection, a detachable connection or an integral connection; may be a direct connection, or an indirect connection by means of an intermediate medium. For those skilled in the art, the specific meanings of the foregoing terms in the invention can be interpreted according to a specific situation.

A first implementation of the invention is described below.

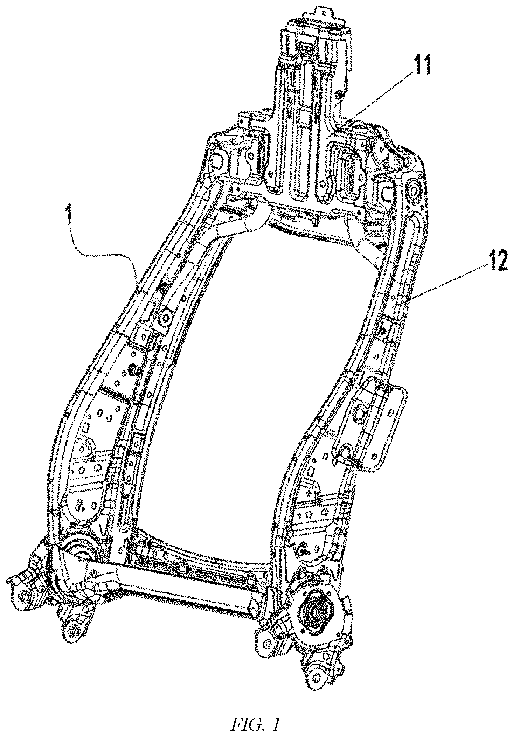

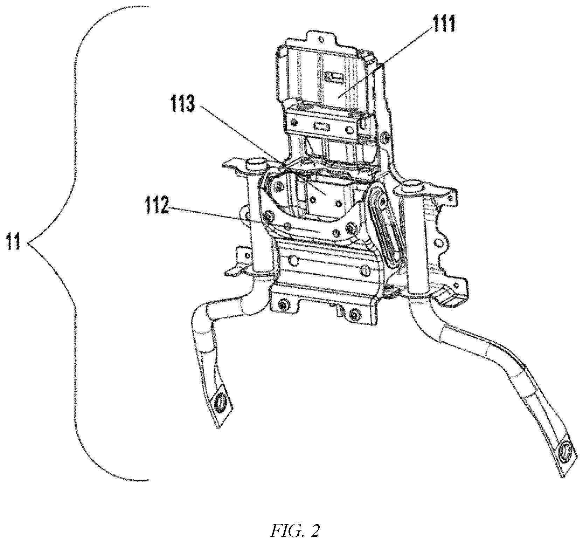

First, referring to FIGS. 1 and 2, a seat 1 with a shoulder adjustment mechanism 11 for the seat 1 of a vehicle according to the invention includes the shoulder adjustment mechanism 11 and a seat back 12. The seat back 12 is disposed on a periphery of the seat 1. The shoulder adjustment mechanism 11 is disposed on an inner side of the seat back 12. The shoulder adjustment mechanism 11 includes a first bracket 111, a second bracket 112, and a linear driving assembly 113. The detailed structures of the first bracket 111, the second bracket 112, and the linear driving assembly 113 are described separately below.

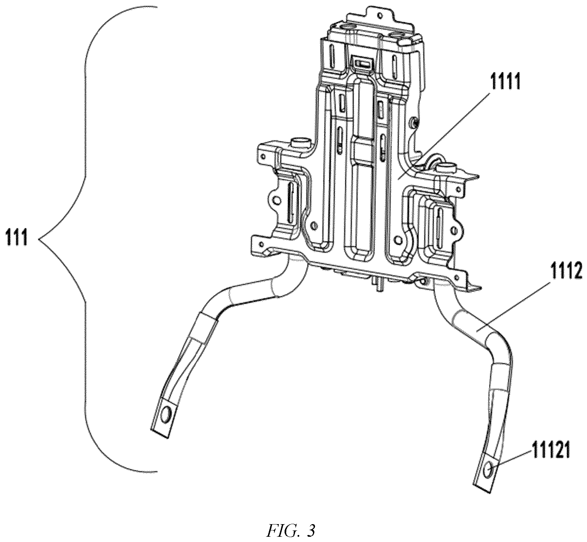

The first bracket 111 of the shoulder adjustment mechanism 11 for the seat 1 of the vehicle of the invention is described below with reference to FIGS. 1 and 3. As shown in the figure, the first bracket 111 includes a headrest mounting bracket 1111, two rotating rods 1112, and rotating shaft mounting holes 11121. The rotating shaft mounting hole 11121 is formed in an end portion of the rotating rod 1112, and the other end of the rotating rod 1112 is fixedly connected to the headrest mounting bracket 1111.

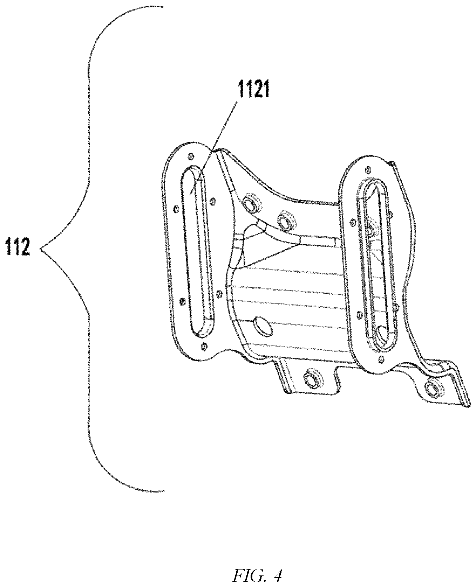

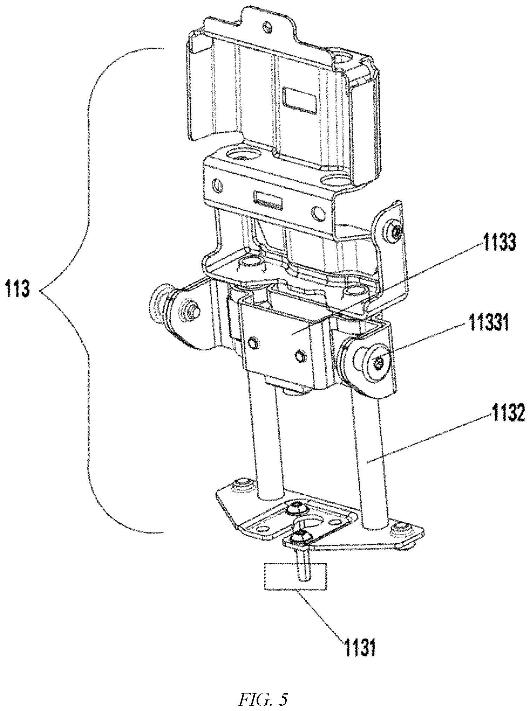

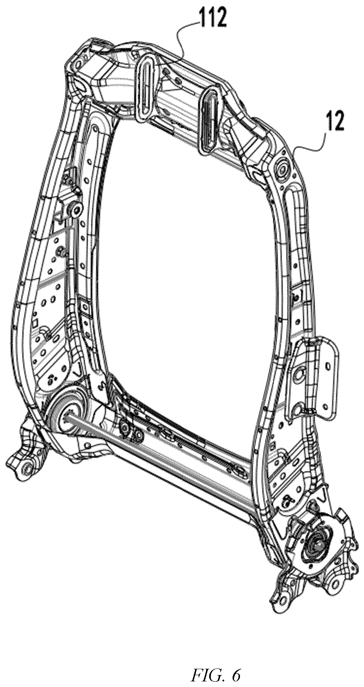

The second bracket 112 and the linear driving assembly 113 of the shoulder adjustment mechanism 11 for the seat 1 of the vehicle of the invention are described below with reference to FIG. 2, FIG. 4, FIG. 5, and FIG. 6. The second bracket 112 is fixed on the seat back 12. First guide rails 1121 are disposed on the second bracket 112. An angle between the first guide rail 1121 and a horizontal direction in which a seat cushion is located is greater than 0° and less than 180°. The linear driving assembly 113 includes a linear motor 1131, second guide rails 1132, and a slider 1133. The linear motor 1131 is not depicted as an actual object, and is indicated by only a box to show an approximate position thereof. The linear motor 1131 is fixed on the headrest mounting bracket 1111. The second guide rails 1132 are also fixed on the headrest mounting bracket 1111. The slider 1133 is slidably disposed on the second guide rails 1132 and the slider 1133 is connected to the first guide rails 1121. A sliding direction of the second guide rails 1132 is set to have a first angle with the horizontal direction in which the seat cushion of the seat 1 is located, and the first angle is greater than 0° and less than 180°.

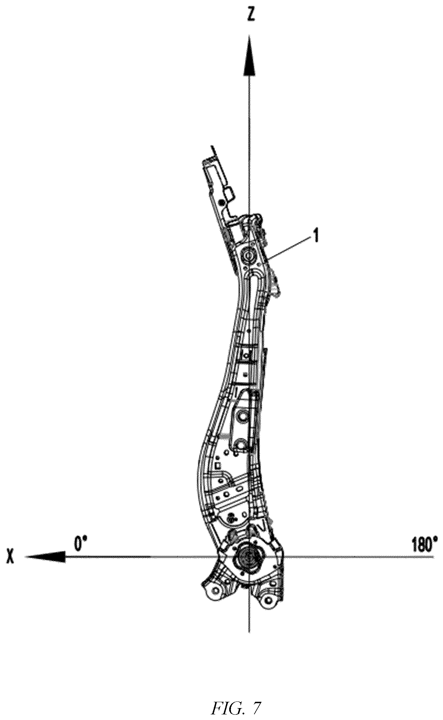

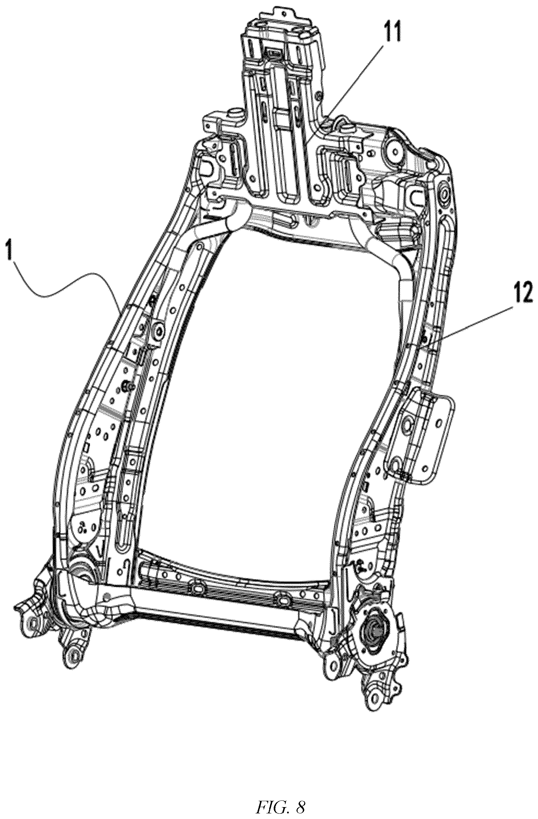

In a case that the above implementation is used, as shown in FIGS. 7 and 8, when shoulder adjustment needs to be performed on the seat 1, the slider 1133 of the linear driving assembly 113 slides along both the second guide rails 1132 and the first guide rails 1121. Because sliding directions of the second guide rails 1132 and the first guide rails 1121 are inconsistent, components in X and Z directions are generated when the slider 1133 slides (X is the horizontal direction in which the seat cushion of the seat 1 is located, and Z is a vertical direction in which the seat cushion of the seat 1 is located). Because the first guide rails 1121 are disposed on the second bracket 112, and the second bracket 112 can be fixedly fixed on the seat back 12, when the slider 1133 slides along the first guide rails 1121 and the second guide rails 1132, the linear driving assembly 113 also moves toward directions of movement components (the X direction and the Z direction). In addition, because the linear driving assembly 113 is disposed on the first bracket 111, and the first bracket 111 can be pivotally connected to the seat back 12, a driving force output by the linear driving assembly 113 enables the first bracket 111 to rotate about the seat back 12.

An advantage of the above implementation is that because a driving direction of the linear driving assembly 113 has the components in both the X and Z directions, the component in the X direction can drive the first bracket 111 to rotate about the seat back 12, and the component in the Z direction reduces occupation of a space in the X direction of a vehicle body. Compared with an existing solution in which the linear driving assembly 113 is disposed in the X direction and the linear driving assembly 113 occupies a maximum space in the X direction, the technical solutions of the invention can implement a shoulder adjustment function of the seat 1 and significantly reduce occupation of the space in the X direction of the vehicle body, thereby solving a problem of inconvenient use caused by high requirements for space in the X direction of the vehicle body due to improper arrangement of the mechanism of an existing seat 1 used for a vehicle.

The first implementation of the invention has been described above, and some preferred implementations are described below.

In a preferred implementation, rollers or protrusions 11331 are disposed on two sides of the slider 1133, correspondingly the first guide rails 1121 are disposed guide rail grooves, and the rollers or protrusions 11331 are disposed in the guide rail grooves.

An advantage of the above implementation is that, compared with a manner in which the slider 1133 is slidably disposed in the guide rail, disposing the rollers or protrusions 11331 on the two sides of the slider 1133 can reduce a friction area between the slider 1133 and the guide rail, so that the shoulder adjustment mechanism 11 for the seat 1 of the vehicle of the invention performs adjustment more conveniently, and an unnecessary loss is reduced.

In a preferred implementation, the first angle is 90°.

An advantage of the above implementation is that when the first angle is selected to be 90°, the driving direction of the linear driving assembly 113 is completely toward the Z direction. In this case, the linear driving assembly 113 occupies a minimum space in the X direction of the vehicle body, thereby better solving the problem of inconvenient use caused by the high requirements for space in the X direction of the vehicle body due to improper arrangement of the mechanism of the existing seat 1 used for a vehicle.

In a second implementation of the invention, the seat 1 includes a shoulder adjustment mechanism 11 and a seat back 12. The shoulder adjustment mechanism 11 includes a first bracket 111, a second bracket 112, and a linear driving assembly 113. The first bracket 111 is configured to be pivotally connected to the seat back 12. The second bracket 112 is integrally disposed on the seat back 12, and first guide rails 1121 are disposed on the second bracket 112. The linear driving assembly 113 is disposed on the first bracket 111, and an output end of the linear driving assembly 113 is connected to the first guide rails 1121. A driving direction of the linear driving assembly 113 is set to have a first angle with a horizontal direction in which a seat cushion of the seat 1 is located, and the first angle is greater than 0° and less than 180°. The shoulder adjustment mechanism 11 is configured to be driven by the linear driving assembly 113 to enable the first bracket 111 to rotate about the seat back 12.

Advantages of the above implementation are that integrally disposing the second bracket 112 on the seat back 12 can reduce a quantity of parts and save costs, and the integral disposition manner improves firmness and improves structural stability.

The invention further provides a seat 1, including a shoulder adjustment mechanism 11 for the seat 1 of the vehicle according to any one of the above technical solutions.

The invention further provides a vehicle, including a seat 1 in the above technical solution.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

## Claims

1. A shoulder adjustment mechanism for a seat of a vehicle, the seat comprising a shoulder adjustment mechanism and a seat back, the shoulder adjustment mechanism comprising a first bracket, a second bracket, and a linear driving assembly, wherein
the first bracket is configured to be pivotally connected to the seat back;
the second bracket is configured to be fixed on the seat back, and first guide rails are disposed on the second bracket;
the linear driving assembly is disposed on the first bracket, an output end of the linear driving assembly is connected to the first guide rails, and a driving direction of the linear driving assembly is set to have a first angle with a horizontal direction in which a seat cushion of the seat is located, the first angle being greater than 0° and less than 180°; and
the shoulder adjustment mechanism is configured to be driven by the linear driving assembly to enable the first bracket to rotate about the seat back.

2. The shoulder adjustment mechanism for a seat of a vehicle according to claim **1,** wherein the first bracket comprises a headrest mounting bracket and two rotating rods, one end of the rotating rod being pivotally connected to the seat back, and the other end of the rotating rod being fixedly connected to the headrest mounting bracket.

3. The shoulder adjustment mechanism for a seat of a vehicle according to claim 2, wherein the linear driving assembly comprises a linear motor, second guide rails, and a slider;
the linear motor is fixed on the headrest mounting bracket;
the second guide rails are fixed on the headrest mounting bracket;
the slider is slidably disposed on the second guide rails, and an output end of the linear motor is drivingly connected to the slider; and
the slider is connected to the first guide rails.

4. The shoulder adjustment mechanism for a seat of a vehicle according to claim 3, wherein rollers or protrusions are disposed on two sides of the slider, correspondingly the first guide rails are guide rail grooves, and the rollers or protrusions are disposed in the guide rail grooves.

5. The shoulder adjustment mechanism for a seat of a vehicle according to claim 4, wherein the first angle is 90°.

6. The shoulder adjustment mechanism for a seat of a vehicle according to claim 5, wherein an angle between the first guide rail and the horizontal direction in which the seat cushion is located is greater than 0° and less than 180°.

7. The shoulder adjustment mechanism for a seat of a vehicle according to claim 2, wherein a rotating shaft mounting hole is formed in one end of the rotating rod, and the rotating rod is pivotally connected to the seat back through the rotating shaft mounting hole.

8. A shoulder adjustment mechanism for a seat of a vehicle, the seat comprising a shoulder adjustment mechanism and a seat back, the shoulder adjustment mechanism comprising a first bracket, a second bracket, and a linear driving assembly, wherein the first bracket is configured to be pivotally connected to the seat back; the second bracket is integrally disposed on the seat back, and first guide rails are disposed on the second bracket; the linear driving assembly is disposed on the first bracket, an output end of the linear driving assembly is connected to the first guide rails, and a driving direction of the linear driving assembly is set to have a first angle with a horizontal direction in which a seat cushion of the seat is located, the first angle being greater than 0° and less than 180°; and the shoulder adjustment mechanism is configured to be driven by the linear driving assembly to enable the first bracket to rotate about the seat back.

9. A seat, comprising a shoulder adjustment mechanism for a seat of a vehicle according to any one of claims 1 to 8.

10. A vehicle, comprising a seat according to claim 9.
